# EUROPEAN PATENT APPLICATION

(11) **EP 3 748 087 A2**
(43) Date of publication of application: **09.12.2020**
(21) Application number: 20174981.9
(22) Date of filing: 15.05.2020
(51) Int. Cl.: E02F 3/43, E02F 9/26, E02F 9/20

(54) **METHOD FOR MEASURING AMOUNT OF SOIL IN BUCKET DURING EXCAVATION OF EXCAVATOR**

(30) Priority: 16.05.2019 KR 20190057378
(71) Applicant: Doosan Infracore Co., Ltd., Incheon 22502 (KR); Potenit Co., Ltd., Seoul 08376 (KR)
(72) Inventor: HONG, Hee Seung, Gyeonggi-do 16509 (KR); KIM, Dong Mok, Incheon 21562 (KR); LEE, Hee Jin, Incheon 22858 (KR); NAM, Hyung Do, Seoul 04734 (KR); ROH, Chi Won, Seoul 08201 (KR); LEE, Soo Jun, Seoul 06747 (KR)
(74) Representative: Isarpatent

(57) **Abstract**

The present disclosure relates to a method for measuring the amount of the soil in a bucket during the excavation of an excavator, and to a numerical and geometrical modeling method which may acquire, by a sensor, the shape of the soil which is loaded in the bucket, and estimate the amount of the soil in the bucket based on the image or point cloud data of the shape of the soil acquired by the sensor.

## Description

### CROSS-REFERENCE TO RELATED APPLICATIONS

This application claims the benefit of Korean Patent Application No. 10-2019-0057378 filed on May 16, 2019, the entire contents of which is incorporated herein by reference for all purposes as if fully set forth herein.

### BACKGROUND OF THE DISCLOSURE

### Field of the Disclosure

The present disclosure relates to a method for measuring the amount of the soil in a bucket during an excavation of an excavator.

### Description of the Related Art

An excavator is equipment which mainly excavates soil, and is a construction machine capable of various works such as soil loading, building basic work, land development work, and cargo loading.

Generally, the excavator is configured so that hydraulic oil sucked from a hydraulic tank is discharged from a main pump and supplied to a boom cylinder, an arm cylinder, and a bucket cylinder, which are mounted to the excavator, through a control valve which is a direction switching valve according to an operation of a joystick lever so that the desired work may be performed by operating an actuator part, that is, a boom, an arm, the bucket, and the like.

Because the excavation environment is very poor and dangerous, research on an intelligent excavator which is automatically controlled by using a predetermined control algorithm gradually rather than the manual operation by an operator is being actively conducted.

The excavation automated and unmanned system using such an intelligent excavator performs the excavation repeatedly by a predetermined number of excavations along a trajectory of the predefined and programmed bucket by dividing a defined work area into a plurality of sections (cells) to meet the specifications of the excavator without measuring the amount of the soil in the bucket during the work.

This method has an advantage in that the algorithm is simple, but there is a possibility that the result after the automatic work is terminated is different as compared to the work plan, and the work efficiency may also be lower than the result directly worked by the person.

For that reason, since the intelligent excavator is controlled depending only on the trajectory of the programmed bucket, one excavation is terminated in a state where the soil is not maximally heaped in the bucket and the workload may be insufficient. Conversely, one excavation is not terminated even if the soil is maximally heaped in the bucket, such that there may cause a case where the soil exceeding the capacity of the bucket collapses, thereby wasting only the time and fuel. In the worst case, only the bucket may be operated in the air without actual excavation, or the excessive load may be repeatedly applied to adversely affect the excavator as well.

That is, the aforementioned method has a problem in that the excavation is repeatedly performed by a predetermined number of excavations depending only on the programmed trajectory of the bucket, in a state where the current excavation state is not confirmed.

### SUMMARY OF THE DISCLOSURE

The present disclosure is intended to solve the above problems, and an object of the present disclosure is to provide to an automated and unmanned system of the excavator the amount of the soil in a bucket every time the excavation is performed to actively modify the trajectories of a boom, an arm, and the bucket based on the amount of the soil in the bucket and to compare a work plan with a current progress rate.

Further, another object of the present disclosure is to provide to a numerical and geometrical modeling method which may acquire, by a sensor, the shape of the soil which is loaded in the bucket, and estimate the amount of the soil in the bucket based on the image or point cloud data of the shape of the soil acquired by the sensor.

As a means for achieving the objects, the present disclosure has the embodiments with the following features.

A method for measuring the amount of the soil in a bucket according to an exemplary embodiment includes preparing acquiring of a loading shape of the soil; the acquiring, by a sensor, the loading shape of the soil loaded in the bucket; and calculating the amount of the soil from the loading shape of the soil.

The preparing includes receiving the positions of a boom, an arm, and the bucket of the excavator; and confirming the position which confirms whether the positions of the boom, the arm, and the bucket have reached predetermined positions.

The calculating of the amount of the soil includes determining whether the amount of the soil in the bucket exceeds a struck state.

If the amount of the soil in the bucket is the struck state or less, the calculating of the amount of the soil calculates the volume of the amount of the soil in the bucket based on a comparison table according to an average height of the soil in the bucket, and calculates a ratio (%) of the volume of the amount of the soil and the volume of the bucket by comparing the volume of the amount of the soil with the volume of the bucket.

If the amount of the soil in the bucket exceeds the struck state, the calculating of the amount of the soil calculates the volume of the amount of the soil by applying a geometrical model to the soil in excess of the struck state, calculates the volume of the amount of the soil when the soil is fully loaded in the struck state with respect to the residual soil, calculates the total volume of the soil by summing up the volume of the soil in excess of the struck state and the volume of the residual soil, and calculates a ratio (%) of the total volume of the soil and a standard fully loaded volume in a heaped state by comparing the total volume of the soil with the standard fully loaded volume in a heaped state.

A method for regularizing an unmanned and automated excavation procedure according to an exemplary embodiment includes receiving terrain information and a work plan of an excavator; setting a trajectory of the excavator as an initial value; measuring the amount of the soil in a bucket every time the excavation is performed; modifying an excavation trajectory which determines an optimal trajectory of a boom, an arm, or the bucket for an optimal heaped state, if the amount of the soil in the bucket exceeds a maximum heaped soil amount (V_max), or is smaller than a minimum heaped soil amount (V_min) based on the amount of the soil in the bucket; updating current terrain information; determining a progress rate which determines whether the excavation has reached a target amount as compared to a work plan; and updating a work status and the work plan if the excavation is smaller than the target amount.

An automated excavator according to an exemplary embodiment includes an upper body which is provided with an internal space in which a cab, in which a driver may board, and a power generator may be mounted; a lower body which is driven by receiving power from the power generator; a front work device which performs an operation by having a boom which extends from the upper body, an arm which is coupled to one end of the boom, and a bucket which is coupled to one end of the arm; a control device which automatically controls the front work device; a communication device which is configured to receive or transmit data remotely; and a sensor which is mounted to the cab or the front work device to recognize terrains and obstacles.

The sensor acquires a loading shape of the soil which is loaded in the bucket while the front work device performs the excavation, and the control device calculates the amount of the soil loaded in the bucket by using the loading shape acquired by the sensor and then controls the front work device by using information of the calculated amount of the soil.

The excavator receives terrain information and a work plan of the excavator through the communication device in advance in order to perform an automatic excavation procedure.

The sensor is selected from at least one of an electromagnetic wave sensor or a camera sensor.

The control device modifies a previous excavation trajectory if the calculated amount of the soil in the bucket is smaller than a predetermined value.

Further, the control device classifies the type of the soil which is loaded in the bucket by using the information acquired by the sensor, and controls the front work device based on the type of the soil.

### BRIEF DESCRIPTION OF THE DRAWINGS

The accompanying drawings, which are included to provide a further understanding of the disclosure and are incorporated in and constitute a part of this specification, illustrate embodiments of the disclosure and together with the description serve to explain the principles of the disclosure. In the drawings:
FIG. 1 is a perspective view of an excavator according to an exemplary embodiment.
FIG. 2 is a flowchart illustrating a method for regularizing an unmanned and automated excavation procedure according to an exemplary embodiment.
FIG. 3 is a flowchart illustrating a method for measuring the amount of the soil in a bucket of an excavator according to an exemplary embodiment.
FIG. 4 is a front view in a state where the soil is heaped in the bucket of the excavator which is acquired by a three-dimensional sensor according to an exemplary embodiment.
FIG. 5 is a top view corresponding to FIG. 4.
FIG. 6 is a front view in a state where the soil is struck in the bucket of the excavator which is acquired by the three-dimensional sensor according to an exemplary embodiment.
FIG. 7 is a top view corresponding to FIG. 6.
FIG. 8 is a top view in a state where the soil in the bucket of the excavator, which is acquired by the three-dimensional sensor according to an exemplary embodiment, is smaller than a struck state.
FIG. 9 is a front view of a case where the soil heaped in the bucket of the excavator is mud, as another example of FIG. 4.

### DESCRIPTION OF SPECIFIC EMBODIMENTS

Hereinafter, embodiments of the present disclosure will be described in detail with reference to the accompanying drawings.

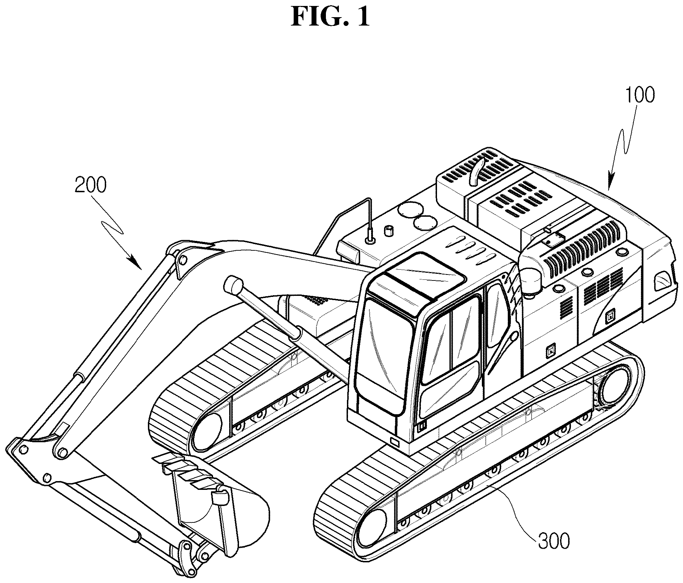

FIG. 1 is a perspective view of an excavator according to an exemplary embodiment.

An excavator is equipment which mainly excavates soil, and is a construction machine capable of various works such as soil loading, building basic work, land development work, and cargo loading.

Referring to FIG. 1, the excavator includes an upper body 100, a front work device 200, and a lower body 300.

The upper body 100 is provided with an internal space (not illustrated) in which a cab 110 in which a driver may board to operate is built in and a power generator (not illustrated) may be mounted.

The upper body 100 may be provided with the cab 110 in a portion close to the work area, as illustrated in FIG. 1. The work area is a space where the excavator is operated, and is positioned in front of the excavator.

The front work device 200 is a device which is mounted to the upper surface of the upper body 100, and for performing the work such as excavation of land or transportation of objects with large load.

The front work device 200 includes a boom which is rotatably coupled to the upper body 100, a boom cylinder which rotates the boom, an arm which is rotatably coupled to the front end of the boom, an arm cylinder which rotates the arm, a bucket which is rotatably coupled to the front end of the arm, and a bucket cylinder which rotates the bucket. During the work of the excavator, each of one end of the boom, one end of the arm, and one end of the bucket may be individually rotated, thereby maximizing the area where the bucket may reach.

The boom may be formed to extend in a direction away from the upper body 100. Further, the boom may include one end which is hinge-coupled to the upper body 100, the other end which is hinge-coupled to the arm, and a middle end which is interposed between the one end of the boom and the other end of the boom.

Here, the other end of the boom is bent from the one end of the boom toward the bucket, that is, the angle of the acute angle between the other end of the boom and the ground is formed to be smaller than the angle of the acute angle between the one end of the boom and the ground, such that the middle end of the boom may be positioned at the opposite side of the bucket with respect to the virtual axis which crosses the one end of the boom and the other end of the boom.

The boom cylinder may be formed at the gravity directional side with respect to the boom. Further, one end of the boom cylinder is hinge-coupled to the upper body.

The arm may be formed to extend in one direction. Further, the arm may include one end which is hinge-coupled to the other end of the boom and the other end which is hinge-coupled to the bucket.

The arm cylinder may be formed at the side opposite to gravity with respect to the boom. Further, the bucket cylinder may further include a bucket cylinder rod which has one end coupled reciprocally to the bucket cylinder tube and has the other end hinge-coupled to a link portion of the bucket.

The excavator according to such a configuration performs the work such as digging or mowing the land by operating the boom by using the boom cylinder, operating the arm by using the arm cylinder, and operating the bucket by using the bucket cylinder.

The lower body 300 is coupled to the lower surface of the upper body 100. The lower body 300 includes a traveling body which is formed of a wheel type using a wheel or a crawler type using caterpillar.

The lower body 300 may be formed of a wheel type using a wheel or a crawler type using caterpillar.

The excavator according to various embodiments of the present disclosure is capable of performing the work and the traveling with unmanned automation, and may have a plurality of sensors which is attached to the upper body 100.

The sensor may acquire the loading shape of the soil which is loaded in the bucket during the excavation of the front work device. Further, the sensor may be composed of an electromagnetic wave sensor, a camera sensor, or an ultrasonic sensor, or may also be composed of a combination of these. In the present disclosure, the loading shape of the soil is used to measure the amount of the soil in the bucket, and the loading shape of the soil is preferably three-dimensional image information. The sensor is preferably a three-dimensional sensor, but is not necessarily limited thereto, and does not exclude a case capable of obtaining the three-dimensional image information by collecting information acquired by a two-dimensional sensor. The following description will be made based on the three-dimensional sensor.

The excavator may have a communication device for receiving data or transmitting data remotely from an external system.

The excavator may receive the terrain information or the work plan of the excavator in advance through the communication device in order to perform an automatic excavation procedure. The excavator includes a control device which automatically controls the front work device 200 by using the terrain information received or the work plan of the excavator through the communication device, and the information acquired by the sensor.

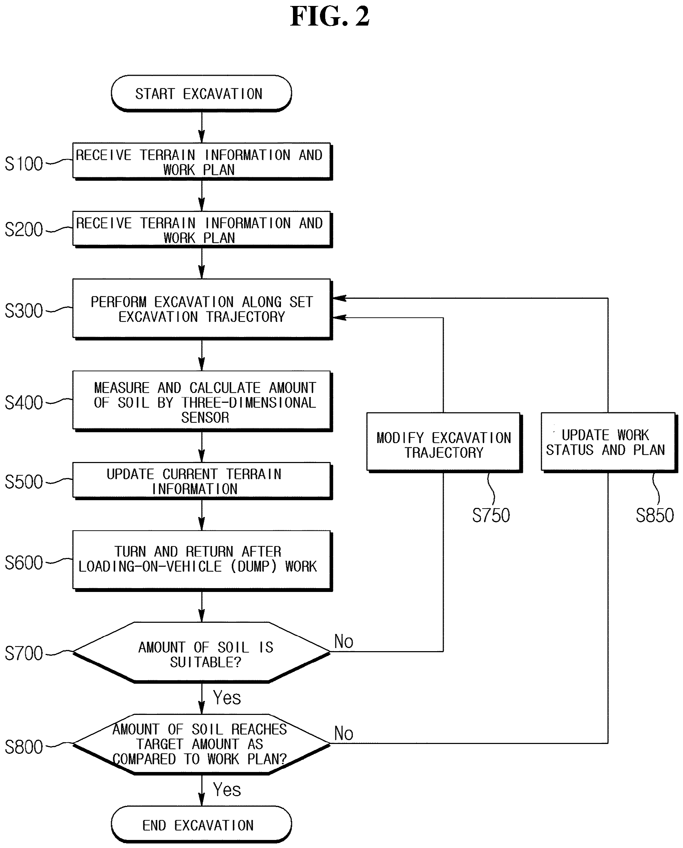

FIG. 2 is a flowchart illustrating a method for regularizing an unmanned and automated excavation procedure according to an exemplary embodiment.

Referring to FIG. 2, a method for regularizing an unmanned and automated excavation procedure includes receiving the terrain information and the work plan of the excavator (S 100), setting an excavator's trajectory as an initial value (S200), performing, by the excavator, the excavation according to the set excavation trajectory (S300), measuring the amount of the soil in the bucket, and calculating the amount of the soil by a three-dimensional sensor (S400), updating current terrain information (S500), turning and returning after the loading-on-vehicle work by the excavator (S600), determining whether the amount of the soil in the bucket is suitable based on the amount of the soil in the bucket (S700), modifying the excavation trajectory which determines an optimal trajectory of the boom, the arm, or the bucket for an optimal heaped state, if the amount of the soil in the bucket exceeds a maximum heaped soil amount (V_max), or is smaller than a minimum heaped soil amount (V_min) (S750), determining a progress rate which determines whether the excavation has reached a target amount as compared to the work plan (S800), and updating the work status and the work plan if the amount of the soil in the bucket is smaller than the target amount (S850).

The receiving of the terrain information and the work plan of the excavator (S100) is a step of receiving the terrain information and the work plan of the excavator in order for the intelligent excavator to perform the unmanned and automated excavation procedure. The terrain information is measured by other means, and the measured information is received in and shared with the excavator through the communication device. The terrain information may be measured and acquired by a Lidar sensor, which is a kind of an electromagnetic wave sensor.

As a next step, the setting of the trajectory of the excavator as the initial value (S200) is a step of setting the trajectory of the boom, the arm, or the bucket of the intelligent excavator as the initial value.

As a next step, the performing of the excavation according to the set excavation trajectory by the excavator (S300) is a step of performing, the excavation by the unmanned automation according to the set excavation trajectory by the intelligent excavator.

As a next step, the measuring of the amount of the soil in the bucket and calculating the amount of the soil by the three-dimensional sensor (S400) is a step of measuring and calculating the amount of the soil in the bucket every time the excavation is performed by using the three-dimensional sensor which is attached to the intelligent excavator. A method for measuring the amount of the soil in the bucket every time the excavation is performed will be described later. Further, the amount of the soil and the type of the soil in the bucket may also be estimated by a camera sensor.

The present disclosure may measure the amount of the soil in the bucket every time the excavation is performed, and provide the information of the measured amount of the soil to actively modify the trajectories of the boom, the arm, and the bucket based on the amount of the soil in the bucket, and may compare the work plan and the current progress rate to update the work plan, thereby efficiently performing the excavation.

As a next step, the updating of the current terrain information (S500) is a step of updating the current terrain information which is changed according to the excavation of the excavator. The terrain information is measured by other means, and the measured information is received in and shared with the excavator through the communication device. The terrain information may be measured and acquired by the three-dimensional Lidar sensor. By updating the current terrain information every time the excavation is performed, it is possible to determine whether to reach the target amount as compared to the work plan.

The turning and returning after the loading-on-vehicle work by the excavator (S600) is a step of performing the loading-on-vehicle work for the soil excavated by the excavator turning, returning to the original position to perform the excavation again, and waiting for the next excavation.

The determining of whether the amount of the soil in the bucket is suitable based on the amount of the soil in the bucket (S700) is for maximizing the efficiency of the excavation of the excavator, and the amount of the soil in the bucket may maintain the optimal heaped state within a range of the maximum heaped soil amount (V_max) and the minimum heaped soil amount (V_min) by comparing the amount of the soil in the bucket with the maximum heaped soil amount (V_max) and the minimum heaped soil amount (V_min).

Meanwhile, the values of the maximum heaped soil amount (V_max) and the minimum heaped soil amount (V_min) may be changed relatively according to the type of the object to be excavated. For example, the object to be excavated may be a material having various weights, such as soil material, gravel, sand, and metal. Accordingly, the values of the maximum heaped soil amount (V_max) and the minimum heaped soil amount (V_min) according to the type of the object to be excavated may be set variously, and setting values for each type of the object to be excavated may be previously stored in the control device. The type of the object to be excavated may also be designated by the user through the communication from the outside, and may also be determined autonomously by the control device of the excavator by using a value of the sensor installed to the excavator.

The next step (S750) modifies the excavation trajectory to determine an optimal trajectory of the boom, the arm, or the bucket for the optimal heaped state, if the amount of the soil in the bucket exceeds the maximum heaped soil amount (V_max), or is smaller than the minimum heaped soil amount (V_min) based on the amount of the soil in the bucket. If the amount of the soil in the bucket exceeds the maximum heaped soil amount (V_max), the excessive load may be repeatedly applied to the excavator, thereby adversely affecting the excavator. Further, if the amount of the soil in the bucket is smaller than the minimum heaped soil amount (V_min), the work efficiency of the excavator is lowered. Accordingly, it is necessary to manage the amount of the soil in the bucket between the minimum heaped soil amount (V_min) and the maximum heaped soil amount (V_max) in order to prevent the excessive load on the excavator and enhance the efficiency of the excavation of the excavator.

As the next step, the determining of the progress rate (S800) is a step of determining whether the excavation of the excavator has reached the target amount as compared to the work plan. If the excavation reaches the target amount as compared to the work plan, the excavation is terminated. If the excavation is smaller than the target amount as compared to the work plan, the work status and the work plan are updated (S850). Further, the excavator performs the excavation along the set excavation trajectory according to the updated work status and work plan (S300).

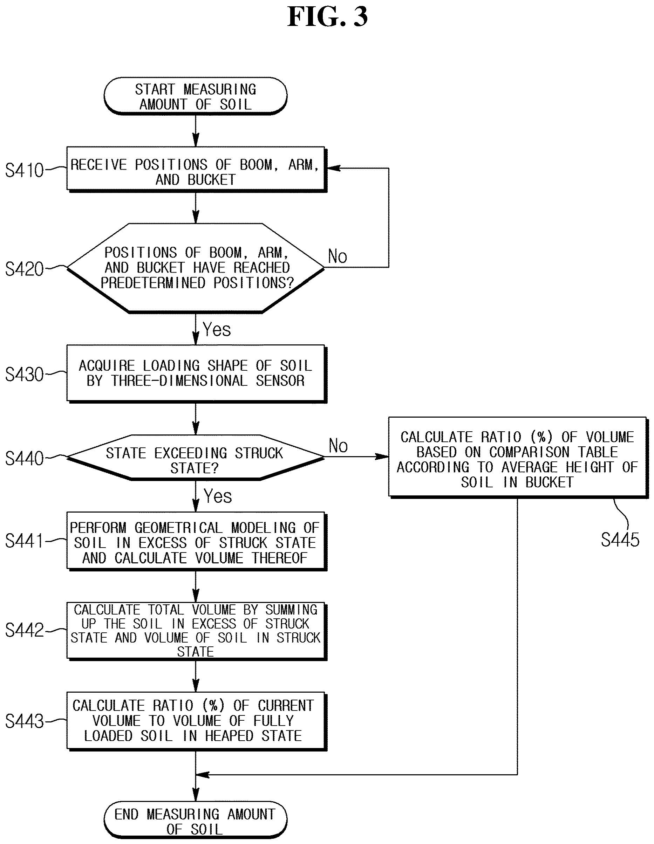

FIG. 3 is a flowchart illustrating a method for measuring the amount of the soil in the bucket of the excavator according to an exemplary embodiment.

Referring to FIG. 3, the method for measuring the amount of the soil in the bucket of the excavator includes preparing, acquiring a loading shape, and calculating the amount of the soil.

The preparing is a step of receiving the positions of the boom, the arm, and the bucket, and confirming whether the positions of the boom, the arm, and the bucket have reached predetermined specific positions in order to measure the amount of the soil in a state where the excavator is operated and the soil is loaded. The preparing includes receiving the positions of the boom, the arm, and the bucket of the excavator (S410), and confirming the position which confirms whether the positions of the boom, the arm, and the bucket have reached the predetermined positions (S420).

The confirming of the position (S420) is a step of confirming whether the positions of the boom, the arm, and the bucket have reached the predetermined specific positions by sensing a trajectory in which the front work device excavates and then crowds the soil.

The positions of the boom, the arm, and the bucket may be measured through a combination of a position sensor, an angle sensor, and a stroke sensor.

Further, the confirming of the position may acquire the position information of the boom, the arm, and the bucket by disposing the sensor at a position capable of sensing the trajectory in which the front work device excavates and then crowds the soil.

For example, the confirming of the position may also acquire the position information by mounting the angle sensor to each joint of the boom, the arm, and the bucket. The angle sensor is mounted to each joint of the boom, the arm, and the bucket, and the control device predetermines and stores the value of the angle sensor which is mounted to each joint of the boom, the arm, and the bucket for each specific operation of the front work device. In this case, the control device may know the values of each angle sensor corresponding to the operation of the front work device capable of acquiring the loading shape of the bucket in advance, and immediately enters acquiring the loading shape (S430) when the values of the angle sensor are sensed.

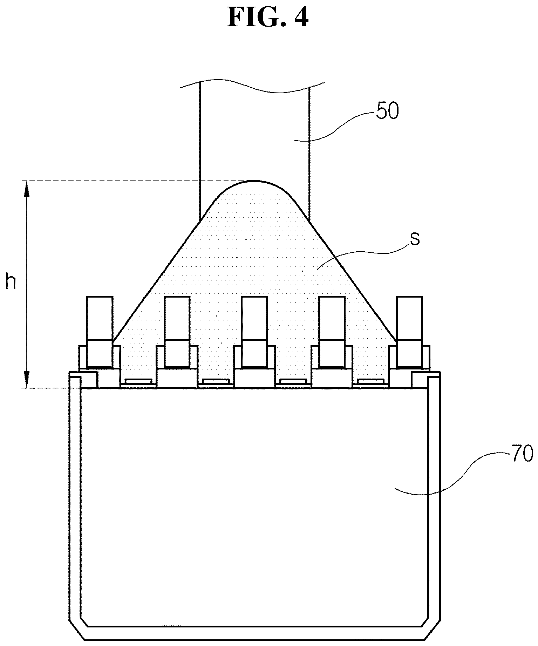

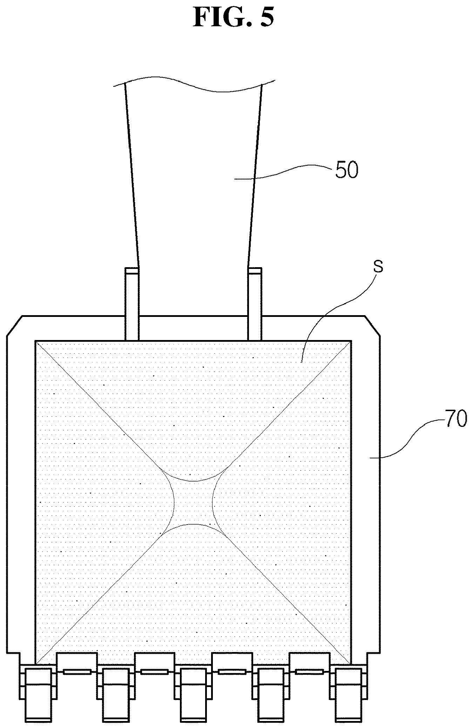

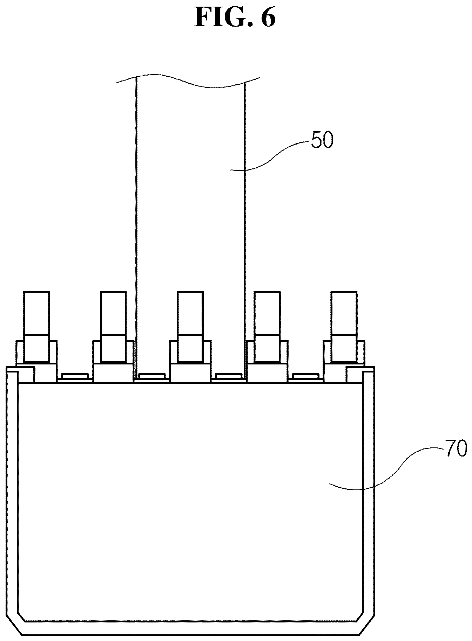

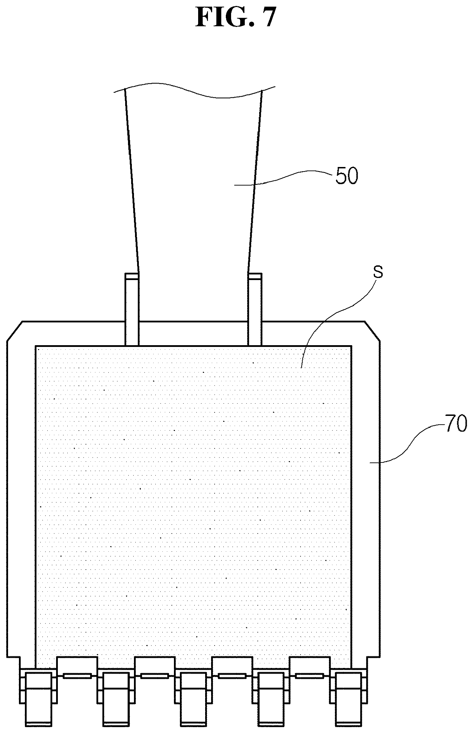

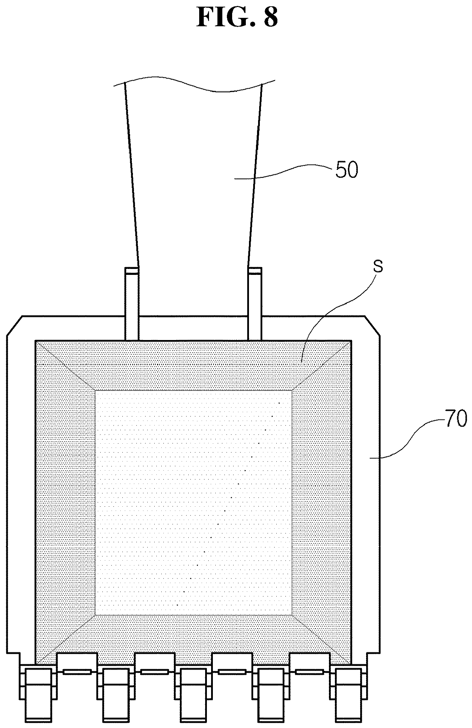

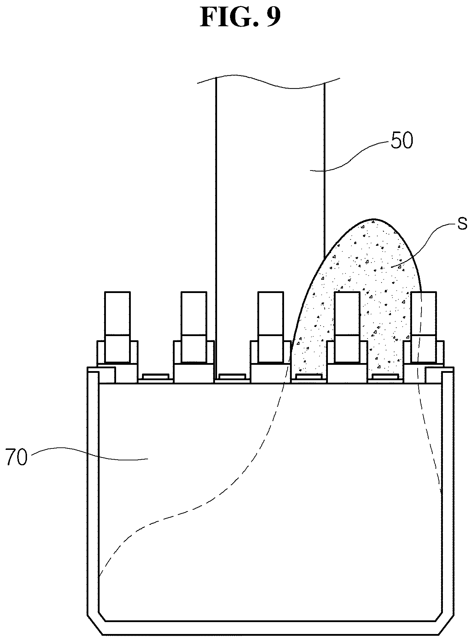

FIG. 4 is a front view in a state where the soil is heaped in the bucket of the excavator, FIG. 5 is a top view of FIG. 4, FIG. 6 is a front view in a state where the soil is struck in the bucket of the excavator, FIG. 7 is a top view of FIG. 6, FIG. 8 is a top view in a state where the soil in the bucket of the excavator is smaller than the struck state, and FIG. 9 is a front view of a case where the soil heaped in the bucket of the excavator is mud as another example of FIG. 4. The images of the bucket or the soil illustrated in FIGS. 4 to 9 represent images acquired by the three-dimensional sensor.

The acquiring of the loading shape (S430) is a step of acquiring, by the three-dimensional sensor, the shape of the soil loaded in the bucket of the excavator. The shape of the soil loaded in the bucket may be classified into a heaped state (exceeding a struck state), the struck state, and a state smaller than the struck state according to the amount of the soil loaded in the bucket.

The three-dimensional sensor may be configured as a three-dimensional Lidar sensor. The three-dimensional sensor may be attached to various positions to acquire the loading shape of the soil loaded in the bucket. For example, the three-dimensional sensor may be attached to the driver seat of the excavator to measure the front view of the loading shape of the soil loaded in the bucket. Further, the three-dimensional sensor may be attached to the boom to measure the top view thereof.

FIGS. 4, 5, and 9 illustrate the heaped state, FIGS. 6 and 7 illustrate the struck state, and FIG. 8 illustrates the state smaller than the struck state.

The calculating of the amount of the soil is a step of calculating the amount of the soil loaded in the bucket from the shape of the soil (S) loaded in the bucket acquired by the three-dimensional image sensor. The calculating of the amount of the soil calculates the amount of the soil step by step by first determining whether to exceed the struck state.

First, the determining of whether to exceed the struck state (S440) determines whether the soil (S) loaded in the bucket exceeds the struck state. The struck state refers to the state of the soil (S) when the soil (S) loaded in the bucket is flattened.

If the amount of the soil in the bucket is the struck state or less, the volume of the amount of the soil in the bucket is calculated based on a comparison table according to the average height of the soil in the bucket. Further, a ratio (%) of the volume of the amount of the soil and the volume of the bucket is calculated by comparing the volume of the amount of the soil with the volume of the bucket.

If the amount of the soil in the bucket exceeds the struck state, the volume of the amount of the soil is calculated by applying a geometrical model to the soil in excess of the struck state (S441). Referring to FIG. 4, the soil in excess of the struck state may be a mountain shape having a height (h) as a portion of exceeding the struck state of the bucket 70. The geometrical model may model the soil into a pyramid (quadrangular pyramid) shape, and calculate the volume of the amount of the soil. Further, the total volume is calculated by summing up the above volume and the volume of the amount of the soil (S) in the struck state. The volume of the amount of the soil in the struck state may be approximated to the volume of the bucket. Finally, the ratio (%) of the total volume of the amount of the soil and a standard fully loaded volume in the heaped state is calculated by comparing the total volume of the amount of the soil with the standard fully loaded volume in the heaped state. The standard fully loaded volume corresponds to the maximum heaped soil amount (V_max).

Meanwhile, in the case where the amount of the soil in the bucket exceeds the struck state, it is necessary to calculate the volume of the amount of the soil in various methods according to the type of the object to be excavated. The object to be excavated may be a material having various weights, such as soil material, gravel, sand, and metal, and the heaped shape may vary according to the type of the object to be excavated. If the object to be excavated is sand, small-sized gravel, or dry soil, there is no difficulty in applying the geometrical model as illustrated in FIG. 4. However, the mud, the rock, or the like may have an irregular shape in the heaped state thereof as illustrated in FIG. 9, and in this case, an error may be large if the volume of the mud or the rock is calculated by modeling the mud or the rock into a pyramid (quadrangular pyramid) shape.

In the case illustrated in FIG. 9, in order to measure the volume of the amount of the soil more accurately, a ratio of the volume of the amount of the soil may be previously calculated as data of an experimental value according to the type of the object to be excavated (sand, mud, gravel, rock, or the like), and the volume of the amount of the soil may be measured by using the data.

Particularly, describing the case of mud, which is likely to show an irregular shape, as an example, the ratio of the volume of the amount of the soil corresponding to the shape exceeding the struck state of the bucket is first configured as data of the experimental values. It is preferable to configure the data of the experimental values for each type of the object to be excavated (sand, mud, gravel, rock, or the like). The data may be stored in an external system and received by the excavator through the communication device. Alternatively, the data may also be stored and utilized in the excavator rather than the external system.

In the case of the mud as illustrated in FIG. 9, the volume of the amount of the soil may be calculated by matching the shape of the portion which exceeds the struck state of the bucket with the data, and applying the ratio of the volume of the amount of the soil according to the matched shape.

Information of the amount of the soil measured every time the excavation is performed by the aforementioned method is provided to an unmanned and automated excavator. As a result, the unmanned and automated excavator may actively modify the trajectories of the boom, the arm, and the bucket based on the amount of the soil in the bucket, and may compare the work plan with the current progress rate to update the work plan, thereby efficiently performing the excavation.

As described above, the present disclosure may acquire the shape of the soil loaded in the bucket by the sensor, and estimate the amount of the soil in the bucket based on the image or point cloud data of the shape of the soil acquired by the sensor.

Further, the present disclosure may provide to the unmanned and automated system of the excavator the amount of the soil in the bucket every time the excavation is performed, thereby actively modifying the trajectories of the boom, the arm, and the bucket based on the amount of the soil in the bucket and comparing the work plan with the current progress rate.

Further, the present disclosure may provide to the unmanned and automated system of the excavator the amount of the soil in the bucket to maintain the optimal heaped state every time the excavation is performed, to suppress the occurrence of overload on the excavator, and to consume the minimum time and fuel for each work, thereby efficiently operating the unmanned and automated excavator.

Although embodiments have been described with reference to a number of illustrative embodiments thereof, it should be understood that numerous other modifications and embodiments may be devised by those skilled in the art that will fall within the scope of the principles of this disclosure. More particularly, various variations and modifications are possible in the component parts and/or arrangements of the subject combination arrangement within the scope of the disclosure, the drawings and the appended claims. Further to variations and modifications in the component parts and/or arrangements, alternative uses will also be apparent to those skilled in the art.

## Claims

1. A method for measuring the amount of the soil in a bucket during the excavation of an excavator, the method comprising:
acquiring, by a sensor, a loading shape of the soil loaded in the bucket; and
calculating the amount of the soil from the loading shape of the soil.

2. The method of claim 1, further comprising preparing the acquiring of the loading shape of the soil.

3. The method of claim 2,
wherein the preparing comprises
receiving the positions of a boom, an arm, and the bucket of the excavator; and
confirming the position which confirms whether the positions of the boom, the arm, and the bucket have reached predetermined positions.

4. The method of claim 1,
wherein the calculating of the amount of the soil comprises determining whether the amount of the soil in the bucket exceeds a struck state.

5. The method of claim 4,
wherein if the amount of the soil in the bucket is the struck state or less, the calculating of the amount of the soil calculates the volume of the amount of the soil in the bucket based on a comparison table according to an average height of the soil in the bucket, and calculates a ratio (%) of the volume of the amount of the soil and the volume of the bucket by comparing the volume of the amount of the soil with the volume of the bucket.

6. The method of claim 4,
wherein if the amount of the soil in the bucket exceeds the struck state, the calculating of the amount of the soil
calculates the volume of the amount of the soil by applying a geometrical model to the soil in excess of the struck state, calculates the volume of the amount of the soil when the soil is fully loaded in the struck state with respect to the residual soil, calculates the total volume of the soil by summing up the volume of the soil in excess of the struck state and the volume of the residual soil, and
calculates a ratio (%) of the total volume of the soil and a standard fully loaded volume in a heaped state by comparing the total volume of the soil with the standard fully loaded volume in a heaped state.

7. A method for regularizing an unmanned and automated excavation procedure, the method comprising:
measuring the amount of the soil in a bucket every time the excavation is performed in the method for measuring the amount of the soil of any claim of claims 1 to 6; and
modifying an excavation trajectory which determines an optimal trajectory of a boom, an arm, or the bucket for an optimal heaped state, if the amount of the soil in the bucket exceeds a maximum heaped soil amount (V_max), or is smaller than a minimum heaped soil amount (V_min) based on the amount of the soil in the bucket.

8. The method of claim 7,
wherein the regularizing of the unmanned and automated excavation procedure comprises
receiving terrain information and a work plan of the excavator; and
setting the trajectory of the excavator as an initial value.

9. The method of claim 7,
wherein the regularizing of the unmanned and automated excavation procedure comprises
updating current terrain information;
determining a progress rate which determines whether the excavation has reached a target amount as compared to a work plan; and
updating a work status and the work plan if the excavation is smaller than the target amount.

10. An automated excavator comprising:
an upper body which is provided with an internal space in which a cab, in which a driver may board, and a power generator may be mounted;
a lower body which is driven by receiving power from the power generator;
a front work device which performs an operation by having a boom which extends from the upper body, an arm which is coupled to one end of the boom, and a bucket which is coupled to one end of the arm;
a control device which automatically controls the front work device;
a communication device which is configured to receive or transmit data remotely; and
a sensor which is mounted to the cab or the front work device to recognize terrains and obstacles,
wherein the sensor acquires a loading shape of the soil which is loaded in the bucket while the front work device performs the excavation, and
wherein the control device calculates the amount of the soil loaded in the bucket by using the loading shape acquired by the sensor and then controls the front work device by using information of the calculated amount of the soil.

11. The automated excavator of claim 10,
wherein the excavator receives terrain information and a work plan of the excavator through the communication device in advance in order to perform an automatic excavation procedure.

12. The automated excavator of claim 10,
wherein the sensor is selected from at least one of an electromagnetic wave sensor or a camera sensor.

13. The automated excavator of claim 10,
wherein the control device modifies a previous excavation trajectory if the calculated amount of the soil in the bucket is smaller than a predetermined value.

14. The automated excavator of claim 10,
wherein the control device classifies the type of the soil which is loaded in the bucket by using the information acquired by the sensor, and controls the front work device based on the type of the soil.
